# EUROPÄISCHE PATENTSCHRIFT

(11) **EP 0 629 494 B1**
(45) Veröffentlichungstag und Bekanntmachung des Hinweises auf die Patenterteilung: **27.11.1996**
(21) Anmeldenummer: 94107429.6
(22) Anmeldetag: 13.05.1994
(51) Int. Cl.: B30B 5/04, B27N 3/26

(54) **Kontinuierlich arbeitende Materialpresse**
Continuously operating press
Presse fonctionnant en continu

(30) Priorität: 14.06.1993 DE 4319663; 17.12.1993 DE 4343223
(43) Veröffentlichungstag der Anmeldung: 21.12.1994
(73) Patentinhaber: HERMANN BERSTORFF Maschinenbau GmbH, D-30627 Hannover (Kleefeld) (DE)
(72) Erfinder: Krüger, Manfred, Dipl.-Ing., D-30559 Hannover (DE); Mayer, Dieter, Dipl.-Ing., D-30453 Hannover (DE); Behrens, Friedrich-Otto, D-30827 Garbsen (DE); Krohn, Manfred, Dipl.-Ing., D-30952 Ronnenberg (DE); Hepke, Harald, Dipl.-Ing., D-30655 Hannover (DE)

(56) Entgegenhaltungen:
- EP-A- 0 491 972
- DE-A- 1 704 839
- DE-A- 3 050 215
- DE-A- 4 103 342
- GB-A- 2 194 169

## Beschreibung

Die Erfindung betrifft eine kontinuierlich arbeitende Materialpresse gemäß dem Oberbegriff des Hauptanspruchs.

Mit derartigen Pressen lassen sich vor allem dünne Produkte, wie beispielsweise Papier-, Textil-, Faser- und Spanplattenbahnen, vorteilhaft herstellen, aber auch ihre Verwendung als Vernetzungspresse für Bahnen aus Kautschuk oder Thermoplasten ist seit langem bekannt. Im Unterschied zu Kalanderanlagen kommen solche Pressen in der Regel dann zum Einsatz, wenn die Aufbringung eines kurzzeitigen Liniendruckes beim Durchgang der Materialbahn zwischen zwei Walzen nicht ausreicht, um das Material den gewünschten Vernetzungsbedingungen auszusetzen.

Gerade bei der Verwendung solcher Pressen im Bereich der Herstellung von Spanplatten vergleichsweise großer Dicke und/oder hoher Materialdichte, hat sich aber der durch die Zugfestigkeit des Stahlbandes begrenzte maximale Anpreßdruck als zu gering erwiesen. Die bisher bekannt gewordenen Vorschläge zur Erhöhung des Anpreßdruckes des Stahlbandes waren nicht dazu geeignet, Span- oder Faserplatten mit einer hohen Dichte kontinuierlich herzustellen. Bei den Herstellern und der verarbeitenden Industrie hat sich daher der Wunsch gefestigt, Platten mit einer besseren Homogenität und einem besseren Dichteprofil über die Plattendicke zu fertigen, um so mechanisch stabilere Produkte herstellen zu können. Dies erfordert aber eine deutlich höhere Anpreßkraft auf die Materialbahn, als dies mit den bisherigen Vorrichtungen möglich war.

So wurde durch die deutsche Auslegeschrift 41 03 342 eine gattungsgemäße Vorrichtung veröffentlicht, bei der der Anpreßdruck des Stahlbandes auf das Material durch eine Vielzahl von Rollen mit einem Rollenlaschenband erhöht wird.

Nachteilig bei dieser Vorrichtung ist, daß bei Verschleiß der Rollen das Stahlband beschädigt wird und die Rollen im eingebauten Zustand nicht kontrolliert werden können.

Bei Vermeidung der Nachteile der bekannten Vorrichtung liegt der Erfindung die Aufgabe zugrunde, eine gattungsgemäße kontinuierliche Presse derart auszubilden, daß mit ihr auch Material bahnen aus Stoffen herstellbar sind, deren Bahnen während des Preßvorganges eine starke Dickenreduzierung erfahren und mit der die Homogenität der Materialdichte in Bezug auf die Plattendicke verbessert werden kann.

Die Aufgabe wird durch eine Vorrichtung mit den Merkmalen des Anspruchs 1 gelöst. Vorteilhafte Ausgestaltungen und Weiterbildungen sind den Unteransprüchen zu entnehmen.

Mit der vorgeschlagenen Materialpresse läßt sich der Anpreßdruck auf die Materialbahn soweit erhöhen, daß die gewünschte Dichtehomogenität im Material und damit eine Verbesserung der Festigkeitskennwerte des produzierten Materials erreicht wird. Außerdem können mit dieser Presse auch Materialbahnen vergleichsweise großer Dicke (bis etwa 12 mm) mit bisher üblicher mechanischer Festigkeit kontinuierlich hergestellt werden.

Von besonderer Bedeutung bei der Materialpresse gemäß den Merkmalen des Hauptanspruchs ist, daß trotz des vergleichsweise einfachen und damit kostengünstigen mechanischen Aufbaus der zusätzlichen Anpreßvorrichtung eine wirkungsvolle Erhöhung der Anpreßkraft auf das Materialband von bisher 20 - 60 N/cm² auf etwa 100 - 200 N/cm² realisiert werden kann.

Um dieses erreichen zu können, wird durch eine, in dem Stahlband an einer definierten Stelle angeordnete Öffnung, an die eine rohrförmige Leitung angeflanscht ist, Druckluft oder Wasserdampf eingepreßt. Auf dem Stahlbandabschnitt bildet sich somit ein die Reibung zwischen dem stationären Stahlbandabschnitt und dem endlosen umlaufenden Stahlband der Presse erheblich vermindernder Gleitfilm aus. Die Leckverluste der Luft bzw. des Wasserdampfes sind überraschend gering.

Die Reibwerte konnten noch mehr durch die Einbringung von Rillen verringert werden, die mit der Einspeiseöffnung für Druckluft oder Wasserdampf in Verbindung stehen. Durch eine sternförmige Anordnung der Rillen und einer weiteren im Randbereich der Stahlbandabschnitte umlaufende Nut bzw. Rille, die mit den sternförmig nach außen geführten Rillen verbunden ist, konnte eine weitere Verbesserung der Reibwerte erzielt werden.

Zur Fixierung der Stahlbandabschnitte über einen Teil der Umschlingungslänge des endlosen Stahlbandes um die Zentraltrommel sind diese an ihrem einen Ende mit dem Materialpressenständer und mit ihrem anderen Ende über Spannvorrichtungen mit diesem Ständer verbunden.

Die Spannvorrichtungen an dem einen Ende der Stahlbandabschnitte dienen aber nicht nur der Fixierung der Abschnitte über dem endlosen, umlaufenden Stahlband, ihre Hauptaufgabe ist es vielmehr, diese Stahlbandabschnitte einer hohen Zugbelastung auszusetzen. Durch diese Maßnahme resultiert die zusätzliche, in Richtung auf die Drehachse der Zentraltrommel gerichtete Kraft, die eine Druckerhöhung auf das zu pressende Materialband bewirkt.

Durch die Aufteilung der Stahlbandabschnitte in Einzelstränge läßt sich die Anpreßkraft auf das zu verpressende Material sektionsweise individuell regeln. Zudem können derartige Einzelstränge leichter und kostengünstiger gewartet und ausgetauscht werden.

Zur weiteren Verbesserung der Reibwerte, aber auch der physikalsich/chemischen Vernetzungsbedingungen in der Materialpresse kann vorgesehen werden, daß anstelle der Preßluft Wasserdampf eingesetzt wird, wobei zusätzlich zur Verbesserung der Reibwerte auch noch in sehr vorteilhafter Weise auf elektrische Zusatzheizeinrichtungen verzichtet werden kann.

Ein weiterer Vorteil der Erfindung ist, daß die Anpreßvorrichtung vergleichsweise gut zugänglich und mit geringem Materialaufwand realisierbar ist. Außerdem können mit einer mit dieser Anpreßvorrichtung ausgerüsteten Materialpresse problemlos Materialbänder unterschiedlicher Dicke hergestellt werden, da sich die Stahlbandabschnitte den sich bei unterschiedlichen Materialdicken ändernden Anpreßradien flexibel anpassen.

Letztlich erlaubt die Aufhängung der flexiblen Stahlbandabschnitte einen sicheren Schutz gegen mechanische Beschädigungen durch leichtes Ausweichen weg von der Zentraltrommel, etwa wenn ungewollt feste Fremdkörper zwischen die Stahlbandabschnitte und das endlose, umlaufende Stahlband gelangen sollten.

Mit Hilfe der Zeichnungen lassen sich Ausführungsbeispiele der Erfindung erläutern.

Es zeigen:
- Fig. 1: eine schematische Seitenansicht der Materialpresse samt zusätzlicher Anpreßvorrichtung.
- Fig. 2: einen Ausschnitt A gemäß Fig. 1.
- Fig. 3: eine Draufsicht auf einen Stahlband- bzw. Stahlplattenabschnitt mit eingebrachten Rillen.
- Fig. 3a: ein zu Fig. 3 gehörendes Diagramm.
- Fig. 4: eine Draufsicht auf einen Stahlbandabschnitt mit nur einer Öffnung und ohne Rillen.
- Fig. 4a: ein zu Fig. 4 gehörendes Diagramm.

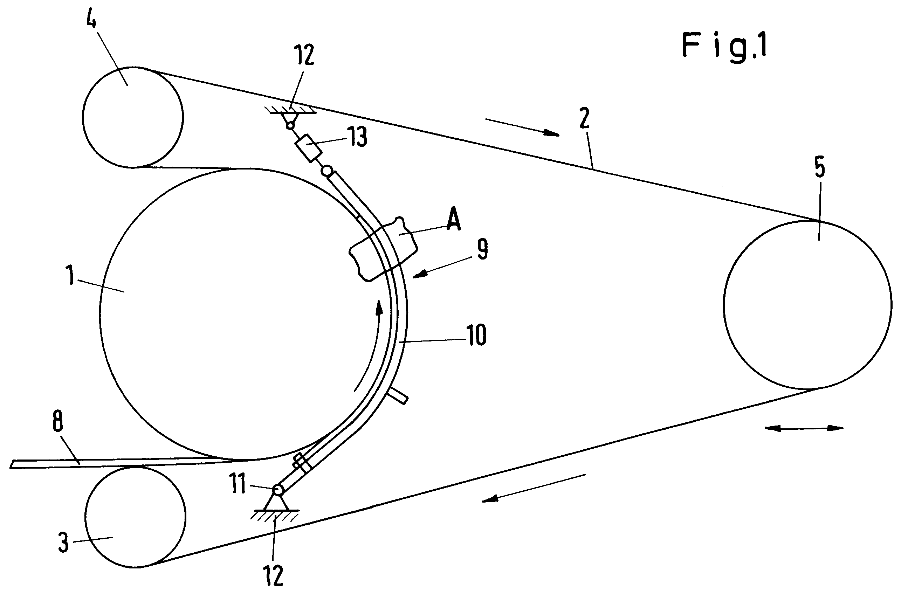

Die kontinuierliche Materialpresse gemäß Fig. 1 umfaßt im wesentlichen eine temperier- und antreibbare Zentraltrommel 1, zwei Umlenktrommeln 3, 4, eine Spanntrommel 5, ein endloses Stahlband 2, eine zusätzliche Anpreßvorrichtung 9 und einen nur angedeuteten Ständer 12 der Presse.

Das Stahlband 2 ist in bekannter Weise so um die Zentraltrommel 1, die Umlenktrommeln 3, 4 und die Spanntrommel 5 geschlungen, daß ein zwischen dem Stahlband 2 und der Mantelfläche der Zentraltrommel 1 eingeführtes, endloses Material band 8 von der beheizten Zentraltrommel 1 mitbewegt und während der Kontaktzeit mit dem Trommelmantel vorgewählten Temperaturen und durch das gespannte Stahlband 2 einer definierten Flächenpressung ausgesetzt ist.

Zur Erhöhung der Anpreßkraft des Stahlbandes 2 sind entlang eines Teilbereiches der Kontaktlänge des Materialbandes 8 mit der Zentraltrommel 1 in Ausgestaltung der zusätzlichen Anpreßvorrichtung 9 Stahlbandabschnitte 10 vorgesehen.

Die Stahlbandabschnitte 10 sind an einen Ende vorzugsweise über ein Drehgelenk 11 mit dem Ständer 12 und an seinem anderen Ende über wenigstens eine Spannvorrichtung 13 mit diesem Ständer 12 verbunden.

Die bevorzugt als Kolbenzylinderanordnungen ausgebildeten Spannvorrichtungen 13 üben eine hohe Zugkraft auf die Stahlbandabschnitte 10 und das zu verpressende Material 8 aus.

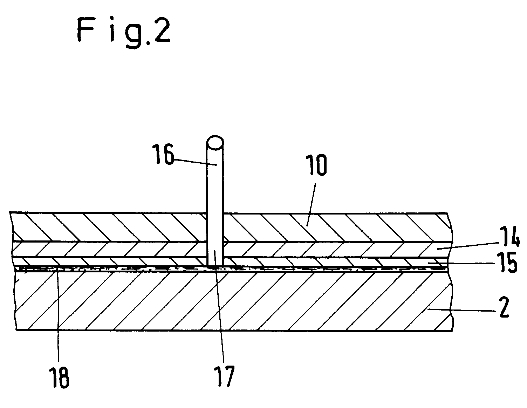

Das in Fig. 2 gezeigte Detail A aus Fig. 1 weist einen Teil des endlosen Stahlbandes 2 und der Stahlbandabschnitte 10 auf. In diesem Ausführungsbeispiel ist auf dem Stahlbandabschnitt 10 eine Trägerschicht 14 aufgebracht.

Zusätzlich wurde eine sehr dünne Gleitschicht 15 auf die Trägerschicht 14 aufgebracht, die Notlaufeigenschaften aufweist, um sicherzustellen, daß im Falle des Ausfalls der Druckluft es nicht zu großen Schäden kommt.

Weiterhin wird ein Anschlußrohr 16 gezeigt, welches an eine, durch den Stahlbandabschnitt 10, die Trägerschicht 14 und die Gleitschicht 15 geführte Öffnung 17 angeschlossen ist.

An das Anschlußrohr 16 wird eine nicht gezeigte Preßluftquelle oder Wasserdampfquelle angeschlossen, so daß sich ein Schmierfilm 18 zwischen dem endlosen Stahlband 2 und der Notlaufschicht 15 ausbildet.

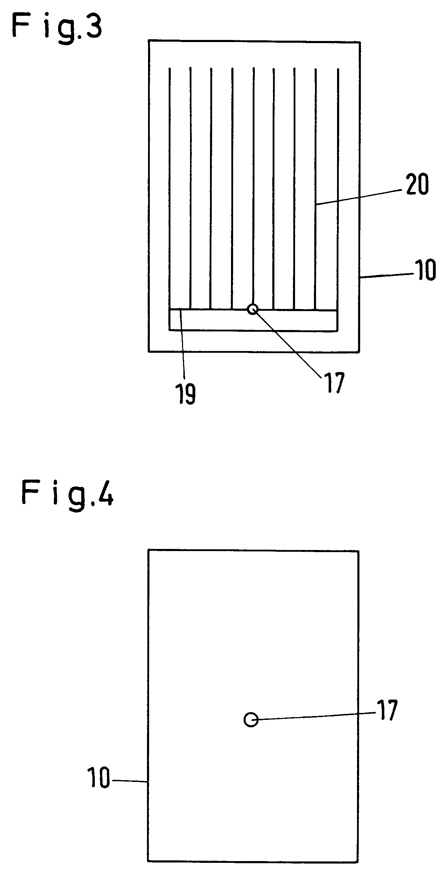

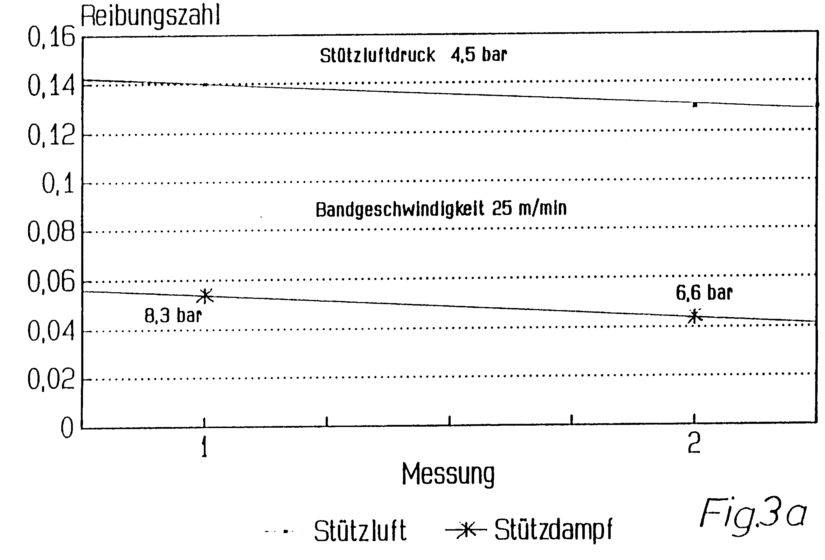

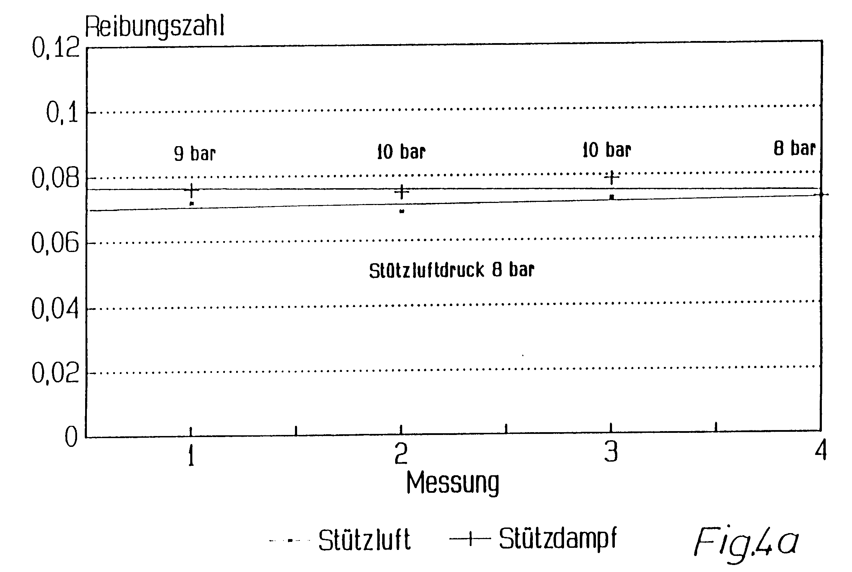

In Fig. 3 und 4 werden in einer Draufsicht Stahlbandabschnitte 10 gezeigt. Bei der in Fig. 3 gezeigten Ausführungsform sind in die Stahlbandabschnitte, d.h. in die Notlaufgleitschicht 15 und zum Teil in die Trägerschicht 14 kleine Rillen eingebracht. Ausgehend von der Öffnung 17 wird z.B. Wasserdampf eingepreßt, der durch die Querrillen 19 in die Längsrillen 20 gelangt, so daß sich ein Schmierfilm 18 aus Stützdampf ausbildet.

In Fig. 3a wird ein Diagramm gezeigt, welches aufgrund von Versuchen mit einem Stahlbandabschnitt 10 erstellt wurde, wie gezeigt in Fig. 3.

Aus diesem Diagramm wird ersichtlich, daß bei einer Geschwindigkeit des endlosen Bandes 2 von 25 m/min die besseren Druckwerte mit Stützdampf bei geringen Reibungszahlen erreicht wurden. Aber auch beim Einsatz von Stützluft werden noch gute Reibungswerte erreicht, die einen entsprechend hohen Flächendruck sicherstellen.

Eine noch deutlichere Verbesserung wurde erzielt, wenn ohne Rillen in dem Stahlbandabschnitt 10 gearbeitet wurde. Etwa in der Mitte der Fläche 10 in Fig. 4 befand sich eine Öffnung ohne jegliche Rillen. Die erzielten Ergebnisse werden in dem in Fig. 4a gezeigten Diagramm gezeigt. Erstaunlich ist, daß in diesem Fall mit Stützluft und Stützdampf annähernd gleiche Werte erzeilt wurden, wobei die Druckwerte beider Druckmedien ähnlich sind, jedoch auf einem noch höheren Niveau liegen.

Besonders vorteilhaft an der zusätzlichen Anpreßvorrichtung 9 ist, daß sie eine sehr gleichmäßige Flächenpressung auf das Stahlband 2 ausübt, wobei durch differenzierte Ansteuerung einzelner Stahlbandabschnitte 10 die zusätzliche Anpreßkraft auf die Materialbahn 8 etwa kontinuierlich gesteigert oder von einem hohen Niveau aus kommend gesenkt werden kann.

### Bezugszeichenliste:

- 1 =: Zentraltrommel
- 2 =: endloses Stahlband
- 3 =: Umlenktrommel
- 4 =: Umlenktrommel
- 5 =: Spanntrommel
- 6 =:
- 7 =:
- 8 =: Materialbahn
- 9 =: zusätzliche Anpreßvorrichtung
- 10 =: Stahlbandabschnitte
- 11 =: Drehgelenk
- 12 =: Ständer
- 13 =: Spannvorrichtung
- 14 =: Trägerschichzt
- 15 =: Gleitschicht
- 16 =: Anschlußrohr
- 17 =: Öffnung
- 18 =: Schmierfilm
- 19 =: Querrillen
- 20 =: Längsrillen

## Patentansprüche

1. Kontinuierlich arbeitende Materialpresse zur Herstellung von endlosen Verbund-, Span-, Faser-, Gummi- und Kunststoffplatten sowie von kunstharzgetränkten Stoffen oder Papieren, umfassend eine temperier- und antreibbare Zentraltrommel (1), ein über wenigstens zwei Umlenk- und eine Spanntrommel (3,4;5) sowie die Zentraltrommel (1) gespanntes, umlaufendes endloses Stahlband (2), bei der die zu bearbeitende Materialbahn zwischen der Zentraltrommelmantelfläche und dem Stahlband (2) geführt, temperiert und gepreßt wird sowie einer zusätzlichen Anpreßvorrichtung (9), die über der der Materialbahn abgewandten Rückseite des Stahlbandes (2) entlang eines Teiles der Mantelfläche der Zentraltrommel (1) angeordnet ist und die in Arbeitsrichtung an einem Ende mit dem Materialpressenständer (12) verbunden und an dem anderen Ende eine Einrichtung (13) zum Spannen aufweist, die auch mit dem Pressenständer (12) verbunden ist,
**dadurch gekennzeichnet,**
daß die zusätzliche Anpreßvorrichtung (9) aus elastischen Stahlbandabschnitten (10) gebildet wird, daß die Stahlbandabschnitte (10) an einer definierten Stelle ihrer Fläche eine Öffnung (17) aufweisen, daß an die Öffnung (17) ein Anschlußrohr (16) für eine einem Druckluft- oder Stützdampfschmierfilm (18) bildende Druckluft- oder Wasserdampfquelle angeflanscht ist.

2. Kontinuierliche Materialpresse nach Anspruch 1,
**dadurch gekennzeichnet,**
daß die dem endlosen Stahlband (2) zugewandte Seite der Stahlbandabschnitte (10) Luftführungsrillen (19, 20) aufweist,
daß die Luftführungsrillen (19, 20) mit der Öffnung (17) in dem Stahlbandabschnitt (10) verbunden sind, daß an die Öffnung (17) in den Stahlbandabschnitten (10) eine einen Druckluft- oder Wasserdampfschmierfilm (18) bildende Druckluft- oder Wasserdampfquelle angeschlossen ist.

3. Kontinuierliche Materialpresse nach einem der Ansprüche 1 und 2,
**dadurch gekennzeichnet,**
daß die, die Preßfläche der zusätzlichen Anpreßvorrichtung (9) bildenden Stahlbandabschnitte (10) mit der Preßluft- bzw. Wasserdampfanschlußöffnung verbundene Längs- und Querrillen (19, 20) aufweisen.

4. Kontinuierliche Materialpresse nach einem der Ansprüche 1 und 3,
**dadurch gekennzeichnet,**
daß die, die Preßfläche bildenden Stahlbandabschnitte, (10) ausgehend von der Preßluft bzw. Wasserdampf einspeisenden Öffnung (17), Querrillen (19) aufweisen, die mit jeweiligen Längsrillen (20) verbunden sind.

5. Kontinuierliche Materialpresse nach Anspruch 1,
**dadurch gekennzeichnet,**
daß die, die Preßfläche bildenden Stahlbandabschnitte (10) an ihrem einen Ende an die Ständerkonstruktion der Presse befestigt sind, und
daß an dem anderen Ende an den Ständer (12) angreifende, die Stahlbandabschnitte (10) über die gekrümmte Fläche spannende Hydraulik- oder Pneumatikzylinder angeordnet sind.

6. Kontinuierliche Materialpresse nach einem der Ansprüche 1 und 5,
**dadurch gekennzeichnet,**
daß die Stahlbandabschnitte (10) eine Notlaufeigenschaften aufweisende Gleitschicht (15) aufweisen.

## Claims

1. Continuously operating material press for producing endless composite sheets, chipboards, fibreboards, rubber sheets and plastics material sheets as well as substances or papers impregnated with synthetic resin, including a temperature-controllable and drivable central drum (1), a circulatory, endless steel belt (2) which is tensioned over at least two guide drums (3, 4) and a tensioning drum (5) as well as over the central drum (1), wherein the material web to be processed is guided between the central drum surface and the steel belt (2), temperature-controlled and pressed, and an additional pressing device (9) which is disposed over the rear side of the steel belt (2) remote from the material web along a portion of the surface of the central drum (1), said additional pressing device being connected at one end to the material press support (12), when viewed with respect to the operating direction, and having at the other end a tensioning device (13) which is also connected to the press support (12), characterised in that the additional pressing device (9) is formed from resilient steel strip portions (10), in that the steel strip portions (10) have an opening (17) at a specific location along their surface, in that a connection tube (16) is mounted on the opening (17) for a source of compressed air or water vapour which forms a lubricating film (18) of compressed air or supporting vapour.

2. Continuous material press according to claim 1, characterised in that the side of the steel strip portions (10) facing the endless steel belt (2) has air guiding grooves (19, 20), in that the air guiding grooves (19, 20) are connected to the opening (17) in the steel strip portion (10), in that a source of compressed air or water vapour, which forms a lubricating film (18) of compressed air or water vapour, communicates with the opening (17) in the steel strip portions (10).

3. Continuous material press according to one of claims 1 and 2, characterised in that the steel strip portions (10), which form the pressing area of the additional pressing device (9), have longitudinal and transverse grooves (19, 20) which are connected to the opening communicating with the compressed air or water vapour respectively.

4. Continuous material press according to one of claims 1 to 3, characterised in that the steel strip portions (10), forming the pressing area, have transverse grooves (19) starting from the compressed air- or water vapour-supplying opening (17), and said portions are connected to respective longitudinal grooves (20).

5. Continuous material press according to claim 1, characterised in that the steel strip portions (10), forming the pressing area, are secured at their one end to the support structure of the press, and in that hydraulic or pneumatic cylinders, which co-operate with the support (12) and tension the steel strip portions (10) over the curved area, are disposed at the other end.

6. Continuous material press according to one of claims 1 to 5, characterised in that the steel strip portions (10) have a slide layer (15), which has emergency running properties.

## Revendications

1. Presse à matière travaillant en continu, pour la fabrication de panneaux sans fin composites, de particules, de fibres, de caoutchouc et de matière plastique, ainsi que d'étoffes et papiers imprégnés de résines synthétiques, comprenant un tambour central (1) pouvant être mis à température et entraîné, une bande d'acier sans fin mobile (2), qui embrasse au moins deux rouleaux de renvoi et un rouleau de tension (3, 4 ; 5) ainsi que le tambour central (1), la bande de matière à travailler étant enfilée entre la surface latérale du tambour central et la bande d'acier (2), mise à température et comprimée, ainsi qu'un dispositif de pressage additionnel (9) qui est disposé sur la face arrière de la bande d'acier (2) qui est la plus éloignée de la bande de matière, le long d'une partie de la surface latérale du tambour central (1), et qui, dans la direction du travail, est fixé par une extrémité, au montant (12) de la presse à matière tandis qu'à l'autre extrémité, il présente un dispositif de tension (13), qui est lui aussi fixé au montant (12) de la presse,
caractérisée
en ce que le dispositif de pressage additionnel (9) est formé de segments élastiques de bande d'acier (10),
en ce que les segments élastiques de bande d'acier (10) présentent une ouverture (17) en un endroit défini de leur surface,
en ce qu'à l'ouverture (17), est raccordé un tube de raccordement (16) relié à une source d'air comprimé ou de vapeur d'eau qui forme un film lubrifiant d'appui fait d'air comprimé ou de vapeur d'eau (18).

2. Presse à matière continue selon la revendication 1,
caractérisée
en ce que la face des segments de bande d'acier (10) qui est dirigée vers la bande d'acier sans fin (2) présente des sillons (19, 20) de guidage de l'air,
en ce que les sillons (19, 20) de guidage de l'air sont reliés à l'ouverture (17) ménagée dans le segment de bande d'acier (10),
en ce qu'à l'ouverture (17) formée dans les segments de bande d'acier (10) est raccordée une source d'air comprimé ou de vapeur d'eau qui forme un film lubrifiant fait d'air comprimé ou de vapeur d'eau (18).

3. Presse à matière continue selon une des revendications 1 et 2,
caractérisée
en ce que les segments de bande d'acier (10) qui forment la surface de pressage du dispositif de pressage additionnel (9) présentent des sillons longitudinaux et transversaux (19, 20) reliés à l'ouverture de raccordement d'air comprimé ou de vapeur d'eau.

4. Presse à matière continue selon une des revendications 1 et 3,
caractérisée
en ce que les segments de bande d'acier (10) qui forment la surface de pressage présentent, en partant de l'ouverture (17) qui achemine l'air comprimé ou la vapeur d'eau, des sillons transversaux (19) qui sont reliés aux sillons longitudinaux correspondants (20).

5. Presse à matière continue selon la revendication 1,
caractérisée
en ce que les segments de bande d'acier (10) qui forment la surface de pressage sont fixés par une de leurs extrémités à la construction de montant de la presse et
en ce qu'à leur autre extrémité, sont disposés des cylindres hydrauliques ou pneumatiques, qui attaquent le montant (12) et qui tendent les segments de bande d'acier (10) sur la surface courbe.

6. Presse à matière continue selon une des revendications 1 et 5,
caractérisée
en ce que les segments de bande d'acier (10) présentent une surface de glissement (15) possédant des propriétés de marche en secours.
